# EUROPÄISCHE PATENTSCHRIFT

(11) **EP 3 389 032 B1**
(45) Veröffentlichungstag und Bekanntmachung des Hinweises auf die Patenterteilung: **10.06.2020**
(21) Anmeldenummer: 18160439.8
(22) Anmeldetag: 07.03.2018
(51) Int. Cl.: G09F 3/03

(54) **VORRICHTUNG ZUR ANORDNUNG EINES ELEKTRONISCHEN DATENTRÄGERS AN EINER KOMPONENTE EINER FLUIDTECHNISCHEN ANLAGE**
DEVICE FOR MOUNTING AN ELECTRONIC DATA CARRIER TO A COMPONENT OF A FLUID INSTALLATION
DISPOSITIF D'AGENCEMENT D'UN SUPPORT DE DONNÉES ÉLECTRONIQUE SUR UN COMPOSANT D'UNE INSTALLATION TECHNIQUE FLUIDIQUE

(30) Priorität: 10.04.2017 DE 102017107705
(43) Veröffentlichungstag der Anmeldung: 17.10.2018
(73) Patentinhaber: GEMÜ Gebr. Müller Apparatebau GmbH & Co. Kommanditgesellschaft, 74653 Ingelfingen (DE)
(72) Erfinder: Frankenbach, Klaus, 74670 Forchtenberg-Schleierhof (DE)
(74) Vertreter: DREISS Patentanwälte PartG mbB

(56) Entgegenhaltungen:
- EP-A1- 1 087 334
- DE-A1-102008 025 061
- FR-A- 1 023 017
- US-B1- 6 588 812

## Beschreibung

Die Erfindung betrifft eine Vorrichtung zur Anordnung eines elektronischen Datenträgers an einer Komponente einer fluttechnischen Anlage nach dem Oberbegriff des Anspruchs 1.

Es sind Membranventile bekannt, bei denen eine Ventilmembran mit einem RFID-Chip ausgestattet ist. Hierdurch wird es möglich, dass nicht nur Daten betreffend die Materialien, die Abmessungen, die Herstellung oder ähnliche Kenngrößen der Membran in dem Datenträger abgespeichert und/oder digital im System referenziert werden, sondern auch Daten betreffend den Kunden bzw. die Lieferung. Somit erhöht das Vorsehen eines RFID-Chips die Nachverfolgbarkeit einer Ventilmembran. Beispielhaft wird auf die DE 10 2013 214 304 A1 verwiesen.

Die EP 1 087 334 A1 betrifft ein versiegeltes System oder die Verwendung als Dichtung, um die Kennzeichnung von Gegenständen, die im Laufe der Zeit identifiziert werden sollen, zu ermöglichen. Vor der Installation der Dichtung wird die Identität der beiden Kapseln fotografiert und digital in einer Datenbank gespeichert. Es handelt sich um einen Archivierungsschritt. Eine Identifikationsnummer, die auf der Kapsel mit der Identität eingraviert ist, wird ebenfalls als Siegelnummer archiviert und mit beiden Identitäten korreliert. Eine elektronische Identität des Siegels, welche in den Kapseln platziert ist, kann durch aktive Lesemittel abgelesen werden.

Mithin besteht die Aufgabe der Erfindung darin, eine Nachverfolgbarkeit für weitere oder noch nicht mit einem RFID-Chip versehene Komponenten einer fluidtechnischen Anlage bereitzustellen.

Diese Aufgabe wird durch eine Vorrichtung nach dem Anspruch 1 gelöst. Vorteilhafte Weiterbildungen der Erfindung sind in den Unteransprüchen angegeben. Für die Erfindung wichtige Merkmale finden sich weitergehend in der nachfolgenden Beschreibung sowie in der beiliegenden Zeichnung.

Es wird vorgeschlagen, dass die Vorrichtung den elektronischen Datenträger umfasst, und dass ein in einen Grundkörper einschiebbarer Einsatz vorgesehen ist. Der Einsatz gibt in einer ersten Position zu dem Grundkörper einen Freigaberaum zu einer Einführung zumindest eines Seilabschnitts eines Seiles frei. Der Einsatz legt in einer zweiten Position zu dem Grundkörper sich selbst und den zumindest einen Seilabschnitt ausziehsicher zu dem Grundkörper fest.

Diese Vorrichtung erlaubt die einmalige und ausziehsichere Anordnung des um die Komponente geführten Seiles und damit die einmalige Anordnung des Datenträgers an der jeweiligen fluidtechnischen Komponente. Die ausziehsichere Festlegung sowohl des Einsatzes als auch des Seilabschnitts verhindert vorteilhaft eine nachträgliche Entfernung des Seiles aus der Vorrichtung. Sollte es doch zu einer Durchtrennung des Seiles oder zu einer Entfernung des Seiles aus der Vorrichtung kommen, so kann die gleiche Vorrichtung durch die ausziehsichere Festlegung des Einsatzes nicht erneut an der Komponente angeordnet werden.

Es wird also eine vor beabsichtigter oder unbeabsichtigter Manipulation geschützte Vorrichtung bereitgestellt, mittels derer die zugeordnete technische Komponente elektronisch eindeutig identifizierbar ist. Dies ist insbesondere bei bereits vorhandenen fluidtechnischen Anlagen vorteilhaft, da eine einfache und sichere Nachrüstung eines elektronischen Datenträgers möglich ist.

Des Weiteren zeichnet sich die bereitgestellte Vorrichtung dadurch aus, dass der Einsatz einen Festlegeabschnitt umfasst, welcher in der zweiten Position gemeinsam mit dem Grundkörper einen Fixierkanal für den Seilabschnitt begrenzt, wobei der Fixierkanal in seinem Verlauf einen Knick aufweist. Hierdurch wird der Seilabschnitt in den Knick gezwungen und dadurch formschlüssig zu der Vorrichtung festgelegt.

In einer ersten Weiterbildung der Vorrichtung wird vorgeschlagen, dass der elektronische Datenträger in einem distalen Bereich des Einsatzes angeordnet ist. Vorteilhaft kann auf diese Art und Weise eine Bauraum-optimierte und kompakte Vorrichtung bereitgestellt werden.

Darüber hinaus ist es insbesondere vorteilhaft, wenn der elektronische Datenträger an einem Boden eines Behälters angeordnet ist, wobei der Behälter mit seinem Boden nach außen zeigend in einer Ausnehmung der Vorrichtung angeordnet ist. Hierdurch wird der elektronische Datenträger vor Umwelteinflüssen geschützt und gleichzeitig auslesbar an einer exponierten Stelle der Vorrichtung angeordnet.

In einer Weiterbildung ist Behälter aus PTFE hergestellt. Hierdurch wird die Abreinigbarkeit der Vorrichtung verbessert.

Eine weitere vorteilhafte Ausführungsform zeichnet sich dadurch aus, dass der Einsatz und der Grundkörper zur Einführung und Festlegung zweier Seilabschnitte ausgebildet sind. Dies ermöglicht eine flexible Montage, bei der das zu verwendende Seil den Anforderungen entsprechend abgelängt wird.

In einer alternativen Ausführungsform ist ein Seil, welches den Seilabschnitt umfasst, mit dem Grundkörper fest verbunden. Durch das Bereitstellen des Seils an der Vorrichtung vereinfacht sich die Montage.

Der Einsatz ist in der zweiten Position vorteilhaft derart in dem Hauptkörper aufgenommen, sodass eine distale Mantelfläche des Einsatzes vom Hauptkörper verdeckt ist. Damit kann keine seitliche Klemmkraft auf den Einsatz ausgeübt werden. Ein nachträgliches Entfernen des Einsatzes wird somit verhindert.

In der zweiten Position des Einsatzes zu dem Grundkörper ist eine distale Abschlussfläche des Einsatzes bündig mit einer Abschlussfläche des Hauptkörpers. Durch diesen bündigen Abschluss wird ein Entfernen des Einsatzes aus dem Hauptkörper verhindert. Des Weiteren ergeben sich Vorteile beim kontaktlosen Auslesen des elektronischen Datenträgers und bei der Abreinigbarkeit der Vorrichtung.

Eine vorteilhafte Ausführungsform zeichnet sich dadurch aus, dass eine Ringnut, welche für die Festlegung des Einsatzes in der zweiten Position vorgesehen ist, zwischen einem ersten und einem zweiten Innenzylinder des Hauptkörpers angeordnet ist, wobei ein erster Führungsabschnitt des Einsatzes in dem ersten Innenzylinder axial geführt ist, und wobei ein zweiter Führungsabschnitt des Einsatzes in dem zweiten Innenzylinder axial geführt ist. Hierdurch wird die axiale Führung des Einsatzes in dem Hauptkörper. Dies wirkt sich wiederum positiv auf die sichere Einrastung in der zweiten Position aus.

Ein weiterer Aspekt der Bearbeitung betrifft ein Verfahren zur Anordnung der Vorrichtung an einer Komponente einer fluidtechnischen Anlage, insbesondere an einem Rohrleitungsstück, einem Ventilkörper, an einem Antriebskörper oder an einem Zwischenstück. Das Verfahren umfasst: Anordnen des Seiles um die Komponente; Einführen des zumindest einen Seilabschnitts in die Vorrichtung; und Eindrücken des Einsatzes in den Grundkörper. Somit kann die Vorrichtung auf einfache Art und Weise montiert werden und es ergibt sich die vorteilhafte ausziehsichere Festlegung des Seiles zu der Vorrichtung.

Nachfolgend wird eine Ausführungsform der vorliegenden Erfindung beispielhaft unter Bezugnahme auf die beiliegende Zeichnung erläutert. In der Zeichnung zeigen:
Figur 1 eine schematische perspektivische Ansicht einer Vorrichtung;
Figur 2 eine Seitenansicht der Vorrichtung;
Figuren 3 und 4 jeweils eine schematische Längsschnittansicht der Vorrichtung;
Figuren 5 und 6 jeweils eine schematische Querschnittansicht der Vorrichtung; und
Figur 7 zeigt ein schematisches Ablaufdiagramm.

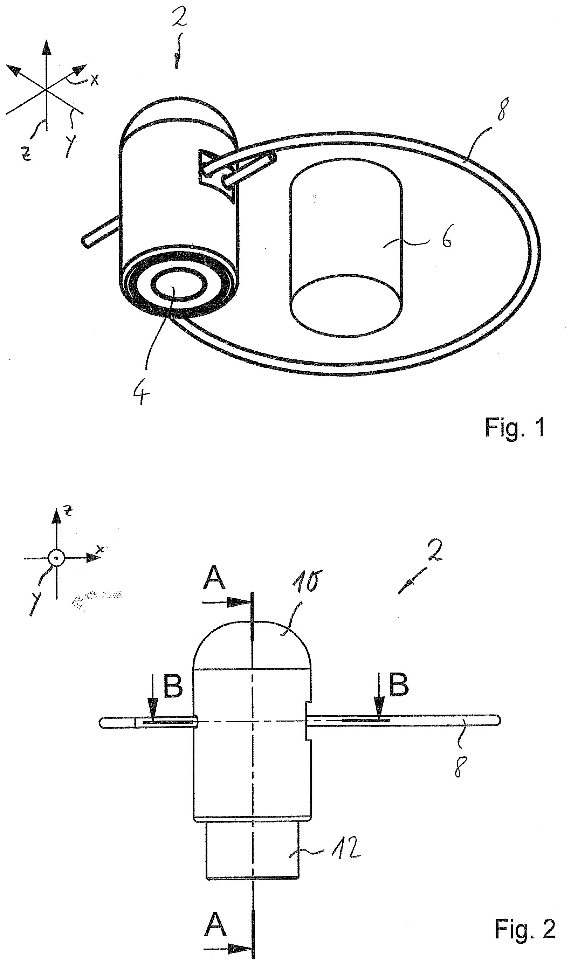

Figur 1 zeigt eine schematische perspektivische Ansicht einer Vorrichtung 2 zur Anordnung eines elektronischen Datenträgers 4 an einer Komponente 6. Die Komponente 6 ist Teil einer fluidtechnischen Anlage und beispielsweise ein Rohrleitungsstück, ein Ventilkörper, ein Antriebskörper oder ein Zwischenstück zwischen einem Ventilkörper und einem Antriebskörper. Ein Seil 8 wird umfangsseitig um die Komponente 6 herum geführt und ist vorliegend mit beiden Enden in der Vorrichtung 2 festgelegt. Selbstverständlich kann das Seil 8 auch nur um einen Abschnitt der Komponente 6 geführt werden. Eine nachträgliche Entfernung der Vorrichtung ist über das Durchtrennen des Seils 8 möglich.

Figur 2 zeigt eine Seitenansicht der Vorrichtung 2 ohne die in Figur 1 gezeigte Komponente 6. Die Vorrichtung 2 umfasst einen Grundkörper 10, in welchem ein Einsatz 12 zunächst verschieblich angeordnet ist. Der Grundkörper 10 und der Einsatz 12 sind aus Edelstahl gefertigt. Der Einsatz 12 steht in Figur 2 aus dem Grundkörper 10 heraus und ist damit in einer ersten Position zu dem Grundkörper 10 angeordnet. In der ersten Position sind die Seilabschnitte des Seiles 8 entlang ihrer Längsachse in der Vorrichtung 2 verschiebbar. Drückt man den Einsatz 12 in den Grundkörper 10 hinein, so wird dieser in eine zweite Position verlagert. In der zweiten Position verrastet der Einsatz 12 in dem Hauptkörper 10 und legt damit sowohl sich selbst als auch die Seilabschnitte des Seils 8 ausziehsicher zu dem Grundkörper 10 fest.

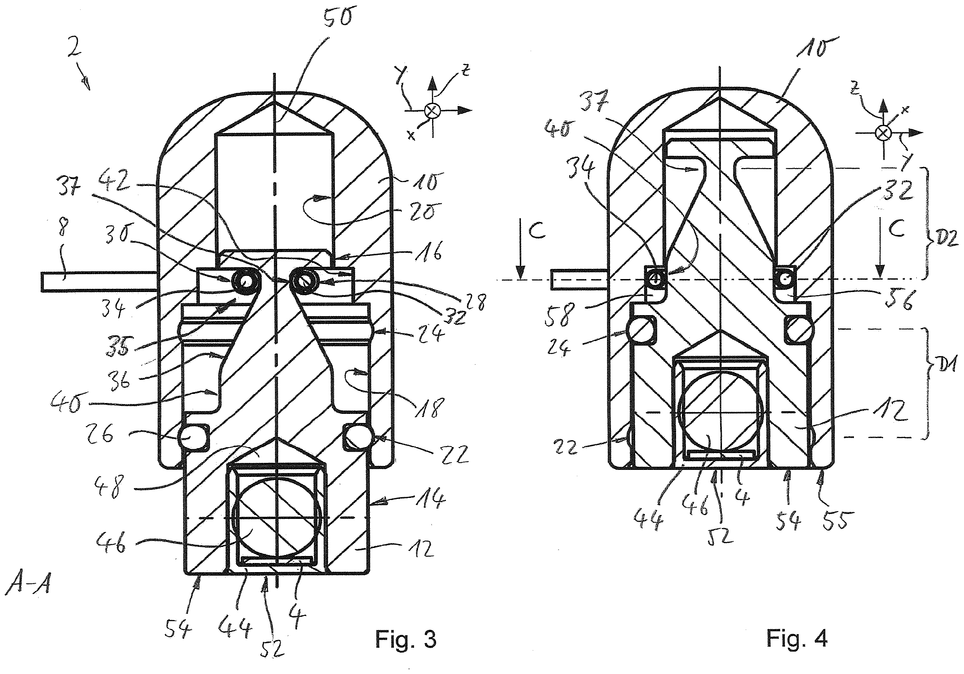

Figur 3 zeigt die Vorrichtung 2 in einem schematischen Längsschnitt A-A aus Figur 2, wobei sich der Einsatz 12 in Bezug zu dem Grundkörper 10 in der ersten Position befindet. Der Einsatz 12 weist einen zylinderförmigen ersten Führungsabschnitt 14 und einen davon beabstandeten zweiten Führungsabschnitt 16 auf. Der erste Führungsabschnitt 14 führt den Einsatz 12 axial in einem Innenzylinder 18 des Grundkörpers 10. Der zweite Führungsabschnitt 16 führt den Einsatz 12 axial in einem Innenzylinder 20 des Grundkörpers 10. Darüber hinaus verhindert eine kreisringförmige Fläche des Einsatzes 12, welche zwischen dem Führungsabschnitt 16 und einem Freigabeabschnitt 37 angeordnet ist, dass einer der Seilabschnitte 32 oder 34 in den Raum des Innenzylinders 20 eindringt.

Der Grundkörper 10 weist im Bereich des ersten Innenzylinders 18 eine distale innere Ringnut 22 und eine proximale innere Ringnut 24 auf. Hierzu korrespondierend weist der Einsatz 12 eine äußere Ringnut auf, in welcher ein O-Ring 26 aufgenommen ist. Der O-Ring 26 definiert mit der äußeren Ringnut des Einsatzes 12 und der inneren Ringnut 22 die erste Position des Einsatzes 12 zu dem Grundkörper 10 im Sinne einer ersten Rastposition. Des Weiteren definiert der O-Ring 26 mit der äußeren Ringnut des Einsatzes 12 und der inneren Ringnut 24 die zweite Position des Einsatzes 12 zu dem Grundkörper 10 im Sinne einer zweiten Rastposition.

Der Grundkörper 10 weist Durchgangsöffnungen 28 und 30 auf, durch welche von einem Außenraum des Grundkörpers 10 Seilabschnitte 32 und 34 in und durch einen inneren Freigaberaum 35 im Inneren des Grundkörpers 10 geführt werden. In der ersten Position des Einsatzes 12 gibt der Freigabeabschnitt 37 des Einsatzes 12 den Freigaberaum 35 für die Seilabschnitte 32 und 34 frei.

Ein innerer Hohlraum des Grundkörpers 2 ist mehrstufig ausgeführt. So sind der Innenzylinder 18 und der Freigaberaum 15 durch einen Durchmessersprung begrenzt. Der Freigaberaum 35 und der Innenzylinder 20 sind ebenfalls durch einen Durchmessersprung begrenzt.

Alternativ zu der Ein- und Durchführung zweier Seilabschnitte kann auch einer der Seilabschnitte mit dem Grundkörper 10 fest verbunden sein und es wird nur der andere Seilabschnitt um die Komponente 6 geführt um anschließend durch den Grundkörper 10 geführt und mittels des Eindrückens des Einsatzes 12 festgelegt zu werden.

Ausgehend von dem Freigabeabschnitt 37 weist der Einsatz 2 auf der dem Führungsabschnitt 16 abgewandten Seite eine Durchmesserzunahme 36 auf, welche in einen Festlegeabschnitt 40 übergeht. Die Durchmesserzunahme 36 ist kegelstumpfförmig ausgebildet. Schiebt man den Einsatz 12 in den Grundkörper 10 ein, so greift die Durchmesserzunahme 36 an den Seilabschnitten 32 und 34 an und bewegt diese in Richtung einer Zylinderinnenfläche 42. Die Zylinderinnenfläche 42 und der Festlegeabschnitt 40 begrenzen einen nachfolgend genannten Fixierkanal für den jeweiligen Seilabschnitt 32, 34. Der Festlegeabschnitt 40 zwingt die Seilabschnitte 32, 34 in den jeweiligen Fixierkanal und legt die Seilabschnitte 32, 34 ausziehsicher zu der Vorrichtung 2 fest.

Der elektronische Datenträger 4 ist in einem topfförmigen Behälter 44 angeordnet, wobei ein Verschlusselement 46 in Form einer Kugel den elektronischen Datenträger 4 zwischen dem Boden und sich selbst einklemmt. Gleichzeitig bewirkt das Verschlusselement 46 in einer Fläche lotrecht zur Längsachse 50 eine Kraft auf die Wandung des Behälters 44. Der Behälter 44 ist bevorzugt aus PTFE, Polytetrafluorethylen, gefertigt und in einer Ausnehmung 48 des Einsatzes 12 im Sinne einer Presspassung angeordnet. Eine nach außen gewandte Oberfläche 52 des Behälters 44 schließt bündig mit einer distalen kreisringförmig ausgebildeten Oberfläche 54 des Einsatzes 12 ab.

Figur 4 zeigt die Vorrichtung 2 in einer schematischen Längsschnittansicht, wobei sich der Einsatz 12 gegenüber dem Grundkörper 10 in der zweiten Position befindet. In der zweiten Position des Einsatzes 12 zum Grundkörper 10 definieren eine Zylinderaußenfläche des Festlegeabschnitts 40 und die Zylinderinnenfläche 42 die zwei Fixierkanäle 56 und 58 für die jeweiligen Seilabschnitte 32 und 34.

Eine distale Mantelfläche als Teil des Führungsabschnitts 14 ist in der zweiten Position im Grundkörper 10 aufgenommen und der Grundkörper 10 verdeckt diese Mantelfläche. Darüber hinaus ist die Oberfläche 54 bündig zu einer distalen Oberfläche 55 des Grundkörpers 10. Insbesondere liegen die Oberflächen 52, 54 und 55 in einer gedachten gemeinsamen Ebene. Eine Distanz D1 zwischen den Ringnuten 22 und 24 sowie eine Distanz D2 zwischen dem Freigabeabschnitt 37 und dem Festlegeabschnitt 40 stimmen überein.

Der Datenträger 4 ist flächig und insbesondere Scheibenförmig ausgebildet und liegt mit der von ihm aufgespannt Ebene im Wesentlichen parallel zu mindestens einer der Oberflächen 52, 54 und 55. Der elektronische Datenträger 4 ist insbesondere ein RFID-Chip, der einen Transponder aufweist, mittels dem Daten unter Zuhilfenahme eines in der Nähe des Datenträgers 4 angeordneten Lesegeräts von dem Datenträger 4 ausgelesen und gegebenenfalls auch in den Datenträger 4 eingeschrieben werden können.

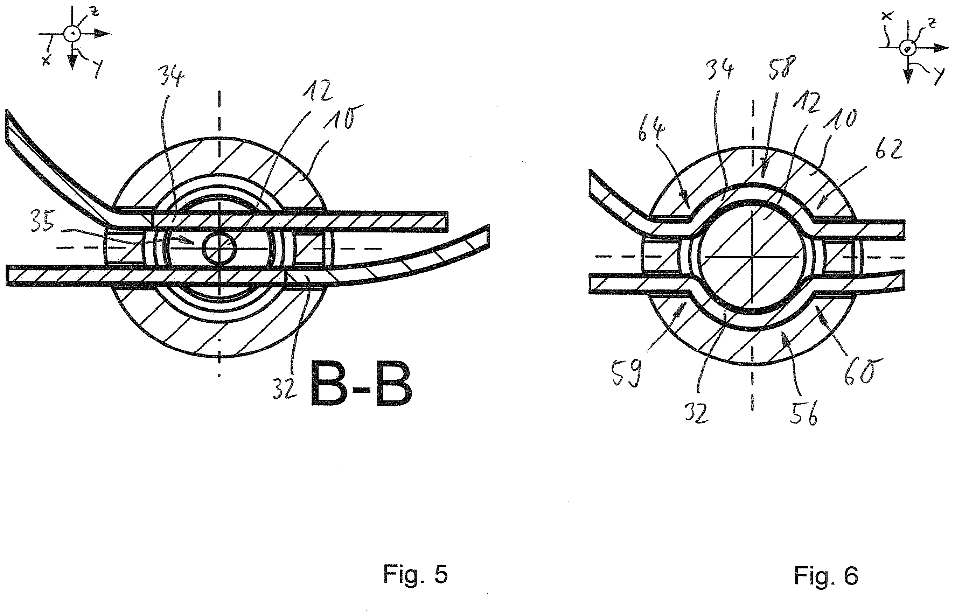

Figur 5 zeigt die Vorrichtung 2 in einem Schnitt B-B aus Figur 2, wobei sich der Einsatz 12 gegenüber dem Grundkörper 10 in der ersten Position befindet. Die Seilabschnitte 32 und 34 können in den Freigaberaum 35, welcher in der ersten Position des Einsatzes 12 freigegeben wird, ohne Weiteres eingeschoben und darin verschoben werden.

Figur 6 zeigt einen schematischen Schnitt analog zu Figur 5, wobei sich der Einsatz 12 gegenüber dem Grundkörper 10 in der zweiten Position befindet. In der zweiten Position bildet der Einsatz 12 gemeinsam mit dem Grundkörper 10 die Fixierkanäle aus, wobei der Fixierkanal 56 Knicke 59 und 60 umfasst. Der Fixierkanal 58 umfasst Knicke 62 und 64. Ein jeweiliger Knick 59, 60, 62, 64 bewirkt eine Umlenkung der Seilabschnitte 32 und 34 um zumindest 40°, insbesondere um zumindest 45°. Somit sind die Seilabschnitte 32 und 34 formschlüssig zu der Vorrichtung 2 festgelegt.

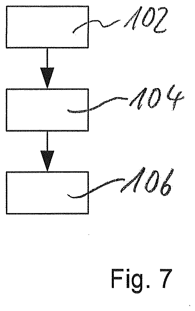

Figur 7 zeigt ein schematisches Ablaufdiagramm zur Montage der Vorrichtung 2. In einem ersten Schritt 102 wird das Seil 8 zumindest abschnittsweise um die Komponente 6 gelegt. In einem Schritt 104 wird zumindest einer der Seilabschnitte 32, 34 in die Vorrichtung 2 eingeführt. In einem Schritt 106 wird der Einsatz 12 in den Grundkörper 10 eingedrückt. Durch die ausziehsichere Festlegung des Seils 8 ergibt sich eine feststehende Schlaufe des Seils 8 um die Komponente 6.

## Patentansprüche

1. Eine Vorrichtung (2) zur Anordnung eines elektronischen Datenträgers (4) an einer Komponente (6) einer fluidtechnischen Anlage, wobei die Vorrichtung (2) den elektronischen Datenträger (4) umfasst, wobei ein Einsatz (12) in einer ersten Position zu einem Grundkörper (10) einen Freigaberaum (35) zu einer Einführung zumindest eines Seilabschnitts (32; 34) eines Seiles (8) freigibt, **dadurch gekennzeichnet,**
- **dass** der Einsatz in den Grundkörper (10) einschiebbar ist,
- **dass** der Einsatz (12) in einer zweiten Position zu dem Grundkörper (10) sich selbst und den zumindest einen Seilabschnitt (32; 34) ausziehsicher zu dem Grundkörper (10) festlegt,
- **dass** der Einsatz (12) einen Festlegeabschnitt (40) umfasst, welcher in der zweiten Position gemeinsam mit dem Grundkörper (10) einen Fixierkanal (56; 58) für den Seilabschnitt (32; 34) begrenzt, und
- **dass** der Fixierkanal (56; 58) für den Seilabschnitt (32; 34) in seinem Verlauf einen Knick (59; 60; 62; 64) aufweist.

2. Die Vorrichtung (2) nach dem Anspruch 1, wobei der elektronische Datenträger (4) in einem distalen Bereich des Einsatzes (12) angeordnet ist.

3. Die Vorrichtung (2) nach dem Anspruch 1 oder 2, wobei der elektronische Datenträger (4) an einem Boden eines Behälters (44) angeordnet ist, und wobei der Behälter (44) mit seinem Boden nach außen zeigend in einer Ausnehmung (48) der Vorrichtung (2) angeordnet ist.

4. Die Vorrichtung nach dem Anspruch 3, wobei der Behälter (44) aus PTFE hergestellt ist.

5. Die Vorrichtung (2) nach einem der vorstehenden Ansprüche, wobei der Einsatz (12) und der Grundkörper (10) zur Einführung und Festlegung zweier Seilabschnitte (32, 34) ausgebildet sind.

6. Die Vorrichtung (2) nach einem der Ansprüche 1 bis 4, wobei ein Seil, welches den Seilabschnitt (32; 34) umfasst, mit dem Grundkörper (10) fest verbunden ist.

7. Die Vorrichtung (2) nach einem der vorstehenden Ansprüche, wobei der Einsatz (12) in der zweiten Position derart in dem Hauptkörper (10) aufgenommen ist, sodass eine distale laterale Mantelfläche des Einsatzes (12) vom Hauptkörper (10) verdeckt ist.

8. Die Vorrichtung (2) nach einem der vorstehenden Ansprüche, wobei in der zweiten Position des Einsatzes (12) zu dem Grundkörper (10) eine distale Abschlussfläche (54) des Einsatzes (12) bündig mit einer Abschlussfläche (55) des Hauptkörpers (10) ist.

9. Die Vorrichtung (2) nach einem der vorstehenden Ansprüche, wobei eine Ringnut (24), welche für die Festlegung des Einsatzes (12) in der zweiten Position vorgesehen ist, zwischen einem ersten und einem zweiten Innenzylinder (18, 20) des Hauptkörpers (10) angeordnet ist, wobei ein erster Führungsabschnitt (14) des Einsatzes (12) in dem ersten Innenzylinder (18) axial geführt ist, und wobei ein zweiter Führungsabschnitt (16) des Einsatzes (12) in dem zweiten Innenzylinder (20) axial geführt ist.

10. Eine Komponente (6) einer fluidtechnischen Anlage, insbesondere ein Rohrstück, ein Ventilkörper, ein Antriebskörper oder ein Zwischenstück, zu der die Vorrichtung (2) nach einem der vorstehenden Ansprüche festgelegt ist.

11. Ein Verfahren zur Anordnung der Vorrichtung (2) nach einem der Ansprüche 1 bis 9 an einer Komponente (6) einer fluidtechnischen Anlage, insbesondere an einem Rohrleitungsstück, an einem Ventilkörper, an einem Antriebskörper oder an einem Zwischenstück, das Verfahren umfassend:
- Anordnen (102) des Seiles (8) um die Komponente (6);
- Einführen (104) des zumindest einen Seilabschnitts (32; 34) in die Vorrichtung (2); und
- Eindrücken (106) des Einsatzes (12) in den Grundkörper (10).

## Claims

1. A device (2) for arranging an electronic data carrier (4) on a component (6) of a fluidic system, the device (2) comprising the electronic data carrier (4), an insert (12), in a first position relative to a main body (10), opening a release chamber (35) for the introduction of at least one cord portion (32; 34) of a cord (8), **characterized in that**
- the insert can be inserted into the main body (10),
- in a second position relative to the main body (10), the insert (12) fastens itself and the at least one cord portion (32; 34) to the main body (10) so as to be secured against pulling out,
- the insert (12) comprises a fastening portion (40) which, in the second position, defines a fixing channel (56; 58) for the cord portion (32; 34) together with the main body (10), and
- the fixing channel (56; 58) for the cord portion (32; 34) has a bend (59; 60; 62; 64) in the path thereof.

2. The device (2) according to claim 1, wherein the electronic data carrier (4) is arranged in a distal region of the insert (12).

3. The device (2) according to claim 1 or claim 2, wherein the electronic data carrier (4) is arranged on a base of a container (44), and wherein the container (44) is arranged in a recess (48) of the device (2), with the base thereof pointing outward.

4. The device according to claim 3, wherein the container (44) is made of PTFE.

5. The device (2) according to any of the preceding claims, wherein the insert (12) and the main body (10) are designed for the introduction and fastening of two cord portions (32, 34).

6. The device (2) according to any of claims 1 to 4, wherein a cord which comprises the cord portion (32; 34) is fixedly connected to the main body (10).

7. The device (2) according to any of the preceding claims, wherein, in the second position, the insert (12) is received in the main body (10) such that a distal lateral outer surface of the insert (12) is covered by the main body (10).

8. The device (2) according to any of the preceding claims, wherein, in the second position of the insert (12) relative to the main body (10), a distal end face (54) of the insert (12) is flush with an end face (55) of the main body (10).

9. The device (2) according to any of the preceding claims, wherein an annular groove (24) which is provided for fastening the insert (12) in the second position is arranged between a first and a second inner cylinder (18, 20) of the main body (10), wherein a first guide portion (14) of the insert (12) is axially guided in the first inner cylinder (18), and wherein a second guide portion (16) of the insert (12) is axially guided in the second inner cylinder (20).

10. A component (6) of a fluidic system, in particular a piece of pipe, a valve body, a drive body or an intermediate piece, to which the device (2) according to any of the preceding claims is fastened.

11. A method for arranging the device (2) according to any of claims 1 to 9 on a component (6) of a fluidic system, in particular on a piece of pipeline, on a valve body, on a drive body, or on an intermediate piece, said method comprising:
- arranging (102) the cord (8) around the component (6);
- introducing (104) the at least one cord portion (32; 34) into the device (2); and
- pressing (106) the insert (12) into the main body (10).

## Revendications

1. Dispositif (2) pour la disposition d'un support de données électronique (4) sur un élément (6) d'une installation fluidique, dans lequel le dispositif (2) comprend le support de données électronique (4), dans lequel un insert (12), dans une première position par rapport à un corps de base (10), libère un espace de libération (35) pour une introduction d'au moins une section de câble (32 ; 34) d'un câble (8),
**caractérisé en ce**
- **que** l'insert peut être inséré dans le corps de base (10),
- **que** l'insert (12), dans une deuxième position par rapport au corps de base (10), s'immobilise lui-même et immobilise l'au moins une section de câble (32 ; 34) par rapport au corps de base (10) de manière bloquée contre une extraction,
- **que** l'insert (12) comprend une section d'immobilisation (40), laquelle, dans la deuxième position, délimite conjointement avec le corps de base (10) un canal de fixation (56 ; 58) pour la section de câble (32 ; 34), et
- **que** le canal de fixation (56 ; 58) présente pour la section de câble (32 ; 34) un coude (59 ; 60 ; 62 ; 64) dans son tracé.

2. Dispositif (2) selon la revendication 1, dans lequel le support de données électronique (4) est disposé dans une zone distale de l'insert (12).

3. Dispositif (2) selon la revendication 1 ou 2, dans lequel le support de données électronique (4) est disposé sur un fond d'un récipient (44), et dans lequel le récipient (44) est disposé dans un évidement (48) du dispositif (2) avec son fond dirigé vers l'extérieur.

4. Dispositif selon la revendication 3, dans lequel le récipient (44) est fabriqué à partir de PTFE.

5. Dispositif (2) selon l'une quelconque des revendications précédentes, dans lequel l'insert (12) et le corps de base (10) sont réalisés pour l'introduction et l'immobilisation de deux sections de câble (32, 34).

6. Dispositif (2) selon l'une quelconque des revendications précédentes 1 à 4, dans lequel un câble, lequel comprend la section de câble (32 ; 34), est relié fixement au corps de base (10).

7. Dispositif (2) selon l'une quelconque des revendications précédentes, dans lequel l'insert (12), dans la deuxième position, est logé dans le corps principal (10) de telle sorte qu'une surface latérale distale de l'insert (12) est cachée par le corps principal (10).

8. Dispositif (2) selon l'une quelconque des revendications précédentes, dans lequel, dans la deuxième position de l'insert (12) par rapport au corps de base (10), une surface de fermeture (54) distale de l'insert (12) est à fleur d'une surface de fermeture (55) du corps principal (10).

9. Dispositif (2) selon l'une quelconque des revendications précédentes, dans lequel une rainure annulaire (24), laquelle est prévue pour l'immobilisation de l'insert (12) dans la deuxième position, est disposée entre un premier et un deuxième cylindre intérieur (18, 20) du corps principal (10), dans lequel une première section de guidage (14) de l'insert (12) est guidée axialement dans le premier cylindre intérieur (18), et dans lequel une deuxième section de guidage (16) de l'insert (12) est guidée axialement dans le deuxième cylindre intérieur (20).

10. Elément (6) d'une installation fluidique, en particulier pièce de tuyau, corps de soupape, corps d'entraînement ou pièce intermédiaire, par rapport auquel le dispositif (2) selon l'une quelconque des revendications précédentes est immobilisé.

11. Procédé de disposition du dispositif (2) selon l'une quelconque des revendications 1 à 9 sur un élément (6) d'une installation fluidique, en particulier sur une pièce de conduite, sur un corps de soupape, sur un corps d'entraînement ou sur une pièce intermédiaire, le procédé comprenant :
- la disposition (102) du câble (8) autour de l'élément (6) ;
- l'introduction (104) de l'au moins une section de câble (32 ; 34) dans le dispositif (2) ; et
- l'enfoncement (106) de l'insert (12) dans le corps de base (10).
